(19)

Europäisches
Patentamt
European
Patent Office
Office européen
des brevets

(11) **EP 1 841 102 A2**

(12) **EUROPEAN PATENT APPLICATION**

(43) Date of publication:
**03.10.2007 Bulletin 2007/40**

(51) Int Cl.:
*H04B 10/18* (2006.01)     *G02B 6/34* (2006.01)

(21) Application number: **07005461.4**

(22) Date of filing: **16.03.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK YU**

(30) Priority: **30.03.2006 JP 2006095143**

(71) Applicant: **FUJITSU LIMITED**
**Kawasaki-shi,**
**Kanagawa 211-8588 (JP)**

(72) Inventor: **Izumi, Hirotomo**
**Kawasaki-shi,**
**Kanagawa 211-8588 (JP)**

(74) Representative: **HOFFMANN EITLE**
**Patent- und Rechtsanwälte**
**Arabellastrasse 4**
**81925 München (DE)**

(54) **Spectral apparatus and wavelength dispersion control apparatus**

(57)     The invention provides a spectral apparatus capable of making the passing wavelength of VIPA board variable easily and at high speed. For this purpose, the apparatus of the invention includes an optical component (110) having two opposing parallel reflection surfaces, for receiving the light focused in one-dimensional direction between the reflection surfaces, multiple-reflecting the incident light on each reflection surface and emitting a part of the incident light through one reflection surface, and allowing the emitted light to interfere mutually to form luminous fluxes different in propagation direction depending on the wavelength, and a rotary mechanism 2 for rotating and displacing the position of the optical component, on an axis substantially vertical to the optical axis of the incident light, and which axis substantially vertical to the one-dimensional direction for focusing the incident light.

FIG. 1

## Description

BACKGROUND OF THE INVENTION

1) Field of the Invention

The present invention relates to a spectral apparatus and a wavelength dispersion control apparatus.

2) Description of the Related Art

As a conventional wavelength dispersion control apparatus, it is proposed to make use of so-called virtually imaged phased array (VIPA) for dividing (separating) wavelength division multiplexing (WDM) light into a plurality of luminous fluxes spatially distinguishable (see, for example, Japanese Patent Application National Publication No. 2000-511655).

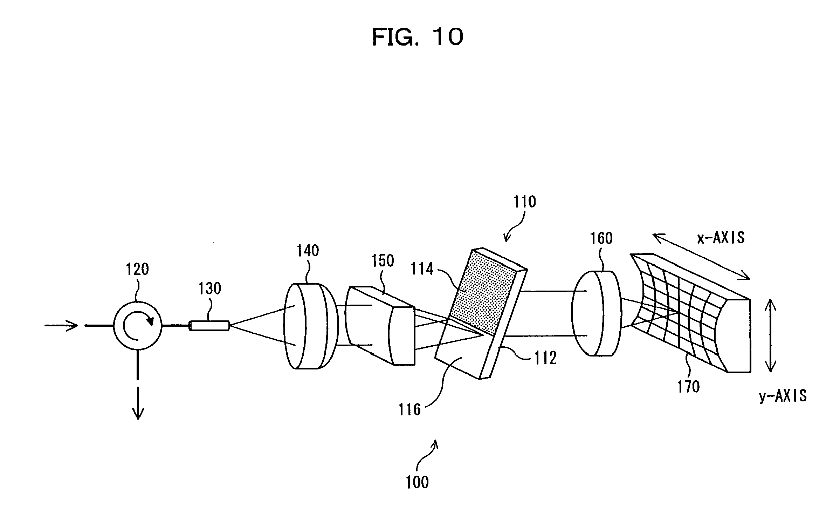

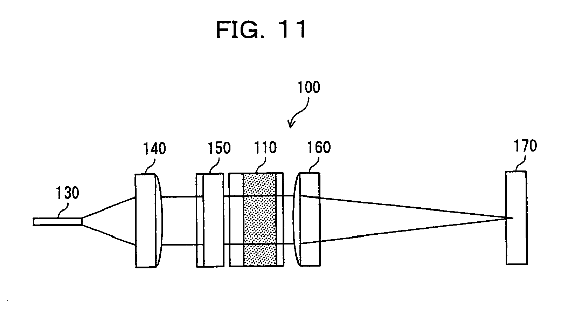

Fig. 10 is a schematic perspective view of structure example of conventional VIPA type wavelength dispersion control apparatus, and Fig. 11 is a top view of the VIPA type wavelength dispersion control apparatus shown in Fig. 10. As shown in Fig. 10 and Fig. 11, in the conventional VIPA type wavelength dispersion control apparatus 100, for example, the light emitted from one end of optical fiber 130 through optical circulator 120 is converted into parallel light in collimating lens 140, and focused on one line segment by line focusing lens 150, and incident into opposing parallel planes through irradiation window 116 of VIPA board 110.

The VIPA board 110 shown in Fig. 10 has the irradiation window 116, and also has a reflective film 114 having a reflectivity of about 100% formed in an upper side region on the same surface of the irradiation window 116. On the opposing side of the reflective film 114, a reflective film 112 of lower reflectivity (for example, about 95%) than 100% is formed in parallel to the reflective film 114.

In this VIPA board 110, by multiple reflective resonance, the light incident through the irradiation window 116 forms a plurality of luminous fluxes different in the propagation direction depending on the wavelength. That is, the incident light to the VIPA board 110, for example, repeats multiple reflection between the reflective film 112 of lower reflectivity than 100% formed on one plane of the VIPA board 110, and the reflective film 114 of reflectivity of about 100% formed on other plane.

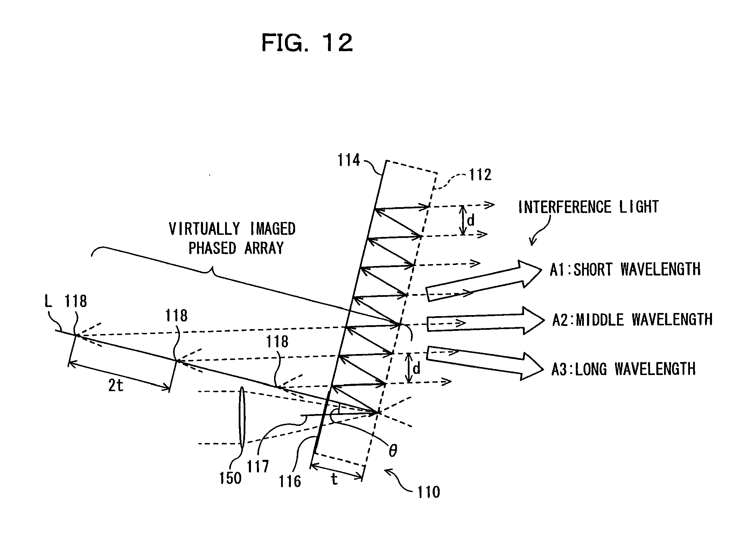

At this time, at every reflection on the surface of the reflective film 112, several percent of light passes through the reflection surface, and is emitted to the outside of the VIPA board 110. Beams of light which has passed through the VIPA board 110 interfere with each other, and form a plurality of (linear) luminous fluxes different in propagation direction depending on the wavelength, in the directions as indicated with arrows A1 to A3 in Fig. 12. As a result, when luminous fluxes are focused at one point by a converging lens 160, each focusing position moves on a straight line along the y-axis in the diagram along with change in wavelength.

By disposing a three-dimensional mirror 170, for example, on this straight line as shown in Fig. 10, the light emitted from the VIPA board 110 and focused by the converging lens 160 is reflected at different positions on the three-dimensional mirror 170 depending on each wavelength, and is returned to the VIPA board 110. The light reflected by the three-dimensional mirror 170 propagates in different directions depending on the wavelength, and is deviated on optical path when returned to the VIPA board 110. This optical path deviation is varied by the wavelength, and different wavelength components are transmitted by different distances, and thereby the wavelength dispersion of input light can be controlled.

This VIPA board 110 is designed to vary the optical path deviation by wavelength. Accordingly, the wavelength components of input light emitted from one end of optical fiber 130, propagating by different distances in different wavelength components, may be incident in the optical fiber 130 as output light. Hence, the VIPA type wavelength dispersion control apparatus 100 can control the waveform dispersion of input light, and output through optical isolator 120 as output light.

When the VIPA type wavelength dispersion control apparatus 100 having such structure is applied in optical communication system, the reception sensitivity of signal light can be enhanced by compensating for wavelength dispersion as cause of deterioration of quality of signal light transmitted through the transmission route.

Fig. 12 is a diagram for explaining that the incident light in the VIPA board 110 is emitted and multiple-reflected. The behavior of light multiple-reflected by the VIPA board 110 is same as behavior of Echelon grating well-known as staircase diffraction grating, assuming a model as shown in Fig. 12. Hence, the VIPA board 110 may be assumed to be a virtual diffraction grating. Behavior as diffraction grating by the VIPA board 110 may be explained as follows.

That is, an optical axis 117 of light incident into the irradiation window 116 of the VIPA board 110 has an inclination angle θ to the surface forming the irradiation window 116 of the VIPA board 110. When the light from the irradiation window 116 is incident into the reflective film 112 of which reflectivity is lower than 100%, part of the light passes through, and rear portion of beam waist spreads, and the remainder is reflected toward the reflective film 114 of reflectivity of about 100%.

The light is first reflected by the reflective film 114, and incident again into the reflective film 112, but its optical axis is deviated by "d" from the light first incident into the reflective film 112. Then, part of the light incident again into the reflective film 112 passes through the reflective film 112. Similarly, at a specific interval d, the light is divided into multiple paths. Beam shape of each path spreads widely from virtual images 118 of beam waist. The virtual images 118 are disposed virtually at a specific interval 2t along a straight line L normal to the VIPA board 110. Herein, "t" is the thickness of the VIPA board 110.

As mentioned above, beams of light spreading from virtual images 118 thus arrayed interfere with each other, and propagate in different directions depending on the wavelength of light input into the irradiation window 116, and form a plurality of luminous fluxes A1 to A3 as indicated with arrows A1 to A3 in Fig. 12. The interval of light paths between adjacent virtual images 118 is d = 2tcosθ, and the difference of path length from adjacent beam is 2tcosθ. The angle dispersion is proportional to these two values, and is cotθ. In this manner, the VIPA board 110 generates a large angle dispersion as compared with other apparatuses, and is known to realize a spectral performance of high precision.

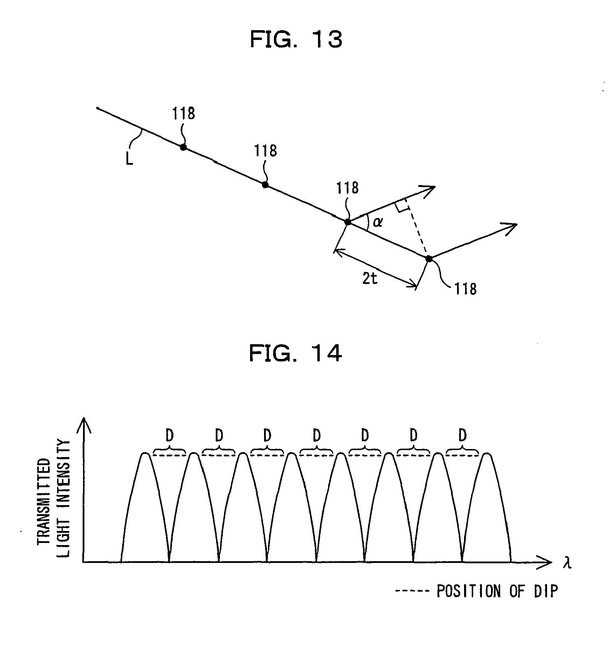

The VIPA board 110 shown in Fig. 12 and the technique disclosed in Japanese Patent Application National Publication No. 2000-511655 have the function of multiple reflective resonance as mentioned above, and the intensity of output wavelength has a periodic characteristic on the frequency axis as shown in Fig. 14. That is, distribution of luminous fluxes in different directions depending on wavelength as indicated with A1 to A3 in Fig. 12 is obtained as periodic peak waveforms as shown in Fig. 14.

Accordingly, the wavelength desired by the user may be in the wavelength region corresponding to dip D on output wavelength characteristic, and in this wavelength region, it is hard to use not only as spectral apparatus, but also as wavelength dispersion control apparatus.

As shown in Fig. 13, wavelength λ for intensifying the beams of light propagating in direction of angle α to straight line L from adjacent virtual image 118 mutually by interference may be expressed as in Formula (1). In Formula (1), n is the refractive index of VIPA board 110, and m is an integer.

$$m\lambda = 2nt(\cos\alpha) \quad (1)$$

From this Formula (1), we obtain λ = (2nt/m)·cosα, and in the condition of refractive index n and thickness t of VIPA board 110 both being constant, the value of λ may be expressed by a function of cosα specified in range on wavelength axis along with increase of value of m, for example, gradually from x to x+1, ... and so forth.

The free spectral range (FSR) of the VIPA board 110 is expressed as in Formula (2). Herein, $\Delta\nu$ is value of FSR, c is velocity of light, θ is inclination of ray of light multiple-reflected in VIPA board, and n is the refractive index of VIPA board.

$$\Delta\nu = c/(2nt\cos\theta) \quad (2)$$

Therefore, by varying the thickness t of VIPA board, the FSR may be changed, and the passing wavelength range can be varied. For example, by varying the temperature of the VIPA board 110, the thickness of the VIPA board 110 is changed by thermal expansion, and the passing wavelength range can be varied.

It is, however, technically demanding to control the temperature of VIPA board 110 uniformly, and it is hard to obtain passing wavelength characteristic by varying t in Formula (1), and even if considering the thermal conduction characteristic of the VIPA board 110, it is difficult to respond to relatively high speed in temperature control, and it is hard to enhance the response speed in variable control of passing wavelength.

SUMMARY OF THE INVENTION

The invention is devised in the light of the above problems, and it is hence an object thereof to make the passing wavelength of VIPA board variable easily and at high speed.

To achieve the object, the spectral apparatus of the present invention is characterized by comprising: an optical component having two substantially opposingparallel reflection surfaces, the optical component receiving light focused in one-dimensional direction between the reflection surfaces, multiple-reflecting the incident light on each of the reflection surfaces and emitting a part of the incident light through one of the reflection surfaces, and allowing the emitted light to interfere mutually to form luminous fluxes different in propagation direction depending on the wavelength; and a rotary mechanism for rotatably displacing the position of the optical component, on an axis substantially vertical to the optical axis of the incident light, and which axis is substantially vertical to the one-dimensional direction for focusing the incident light.

In this case, the position of the optical component in the rotary mechanism may be rotated and displaced, and thus the wavelength range of the light, which passes through, of the optical component may be displaced.

The two reflection surfaces may rotate and displace in parallel to the one-dimensional direction in the focusing direction of the incident light, on the basis of the position of the optical component for rotating and displacing in the rotary mechanism, or the two reflection surfaces may rotate and displace being offset from the position parallel to the one-dimensional direction in the focusing direction of the incident light, on the basis of the position of the optical component for rotating and displacing in the rotary mechanism.

The spectral apparatus of the invention includes a collimating lens for collimating input light beam into parallel light, and a line focus lens for focusing the parallel light from the collimating lens on one line segment, and guiding the focused light into the space between the reflection surfaces of the optical component as the light focused in the one-dimensional direction.

Furthermore, the optical component may be composed of virtually imaged phased array.

The wavelength dispersion control apparatus of the present invention is characterized by comprising an optical component having two substantially opposing parallel reflection surfaces, the optical component receiving light focused in one-dimensional direction between the reflection surfaces, multiple-reflecting the incident light on each of the reflection surfaces and emitting a part of the incident light through one of the reflection surfaces, and allowing the emitted light to interfere mutually to form luminous fluxes different in propagation direction depending on the wavelength, a reflector for reflecting luminous fluxes of respective wavelengths emitted in different directions from one of the reflection surfaces and returning the luminous fluxes to the optical component, and a rotary mechanism for rotatably displacing the position of the optical component, on an axis substantially vertical to the optical axis of the incident light, and which axis substantially vertical to the one-dimensional direction for focusing the light incident into the element.

In this case, the wavelength dispersion control apparatus further comprises a converging lens for converging the luminous fluxes different in propagation direction depending on the wavelength into one point different in each of the wavelength, and the reflector has a three-dimensional shape in its reflection surface, and reflects light converged in one point different depending on the wavelength from the converging lens, and gives a different optical path depending on the wavelength of the reflected light.

Thus, according to the invention, the rotary mechanism is capable of rotating and displacing the position of the optical component, on an axis substantially vertical to the optical axis of the incident light, that is, the axis substantially vertical to the one-dimensional direction for focusing the incident light, and as compared with the technique of varying the thickness by temperature control of optical component, the passing wavelength characteristic can be shifted easily, and the response characteristics for varying the passing wavelength can be increased in speed.

BRIEF DESCRIPTION OF THE DRAWINGS

Fig. 1 is a schematic perspective view of wavelength dispersion control apparatus in an embodiment of the invention;
Fig. 2A, Fig. 2B, Fig. 3A, and Fig. 3B are schematic diagrams for explaining the rotation mode of VIPA board by rotary mechanism;
Fig. 4 is a diagram for explaining that the passing wavelength characteristics of VIPA board can be varied by rotary mechanism;
Fig. 5 is a diagram showing the relation of rotational angle and wavelength variation of passing wavelength characteristics by rotary mechanism;

Fig. 6A and Fig. 6B are diagrams schematically showing a plurality of linear luminous fluxes incident into the converging lens;
Fig. 7A, Fig. 7B, Fig. 8A, and Fig. 8B are explanatory diagrams about components of light output from the irradiation window, out of the light controlled in wavelength dispersion by reflection by three-dimensional mirror;
Fig. 9 is a diagram for explaining that the bandwidth of passing wavelength band is not changed, as compared with reference state not rotated, even if the VIPA board is rotated by rotary mechanism;
Fig. 10 is a schematic perspective view of structural example of conventional VIPA type wavelength dispersion control apparatus;
Fig. 11 is a top view of VIPA type wavelength dispersion control apparatus shown in above-mentioned Fig. 10;
Fig. 12 is a diagram for explaining the multiple reflection by VIPA board;
Fig. 13 is a diagram for explaining the mode of interference of light emitted from VIPA board; and
Fig. 14 is a diagram for explaining the periodic characteristics of intensity of output wavelength of VIPA board on frequency axis.

DESCRIPTION OF THE PREFERRED EMBODIMENTS

Referring now to the drawing, embodiments of the invention are described below.

The objects of the invention other than those described above, and other technical problems, means for solving the technical problems, and effects and action thereof will be better understood and appreciated from the following detailed description of the embodiments.

[A] Description of an embodiment of the invention

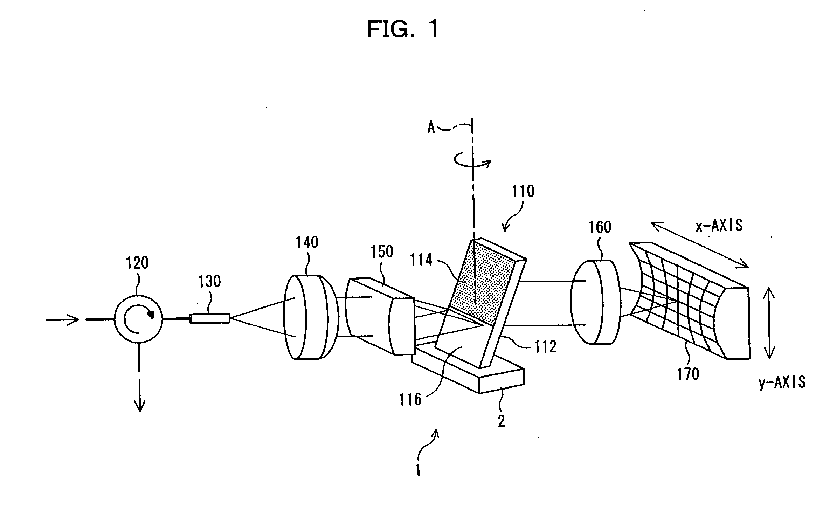

Fig. 1 is a schematic perspective view of wavelength dispersion control apparatus 1 in an embodiment of the invention. The wavelength dispersion control apparatus 1 shown in Fig. 1 is designed to vary the passing wavelength characteristic of VIPA board 110 by adding a rotary mechanism 2 for rotating and displacing the position of VIPA board 110 to the structure shown in Fig. 10 (indicated by reference numeral 100). In Fig. 1, same parts as in Fig. 10 are identified with same reference numerals.

A collimating lens 140 collimates the light beam input from the optical fiber 130 into parallel light, and a line focus lens 150 focuses the parallel light from the collimating lens 140 on one line segment, and guides the focused light into the space between the reflection surfaces 112, 114 of the VIPA board 110 as the light focused in the one-dimensional direction.

The VIPA board 110 is an optical component having two opposing parallel reflection surfaces 112, 114, for receiving the light focused in one-dimensional direction between the reflection surfaces 112, 114, multiple-reflecting the incident light on each one of reflection surfaces 112, 114, and emitting a part of the incident light through one reflection surface 112, and allowing the emitted light to interfere mutually to form luminous fluxes different in propagation direction depending on the wavelength.

Furthermore the rotary mechanism 2 is for rotating and displacing the position of the VIPA board 110, on an axis substantially vertical to the optical axis of the incident light, that is, the axis A substantially vertical to the one-dimensional direction for focusing the light incident into the space between the reflection surfaces 112, 114, which may be composed of micromotor or the like provided in the folder fixing the VIPA board 110.

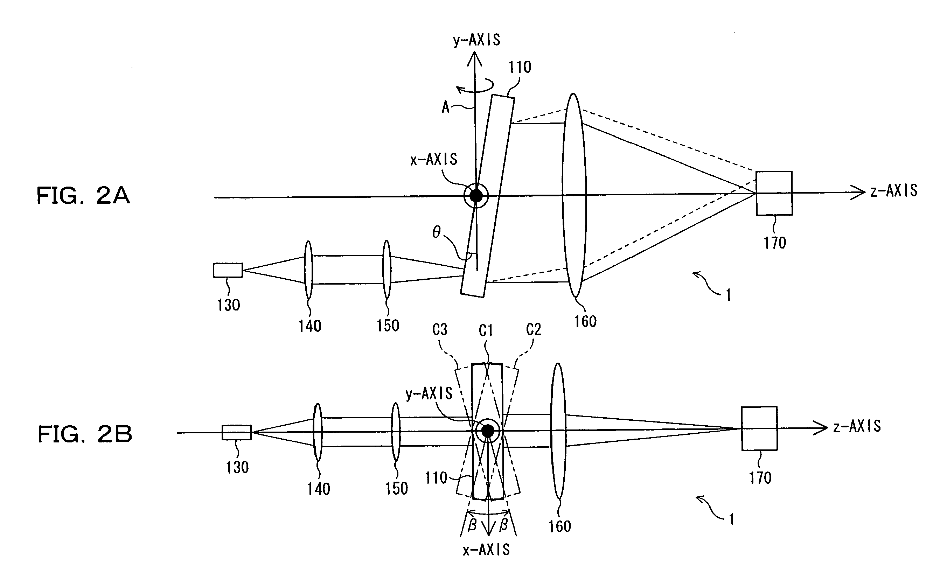

Fig. 2A and Fig. 2B are schematic diagrams for explaining the rotation mode of the VIPA board 110 by the rotary mechanism 2, and specifically Fig. 2A is a front view, and Fig. 2B is a top view. As shown in Fig. 2A and Fig. 2B, supposing to place the z-axis in parallel to the optical axis of the light incident into the VIPA board 110, and the x-axis in parallel to the line segment focused by the line focus lens 150, the rotary mechanism 2 is designed to rotate and displace the position of the VIPA board 110, about the axis A in parallel to the y-axial direction vertical to the x-axis and z-axis (about y-axis in Fig. 2A and Fig. 2B). As shown in Fig. 2A, the VIPA board 110 is inclined by angle $\theta$ about the x-axis (optical axis).

As mentioned above, since the FSR (free spectral range) of the VIPA board 110 is as shown in Formula (2), and by varying the thickness t of the above-mentioned VIPA board, the FSR can be varied, and the passing wavelength range can be changed.

As in the embodiment, by rotating the VIPA board 110 about the axis A by the rotary mechanism 2, the apparent thickness of VIPA board 110 as seen from the direction of z-axis does not seem to be changed as compared with the state not rotated.

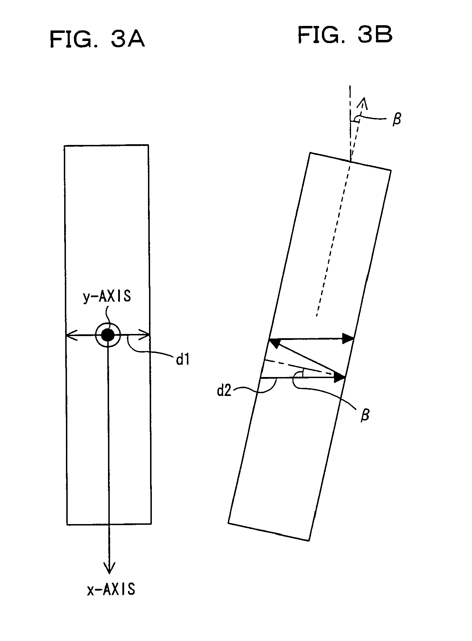

For example, as indicated by C1 in Fig. 2B, when the position of VIPA board 110 is in reference state not rotated about the axis A (that is, angle $\beta$ = 0 degree; x-axis being parallel to irradiation window 116 of VIPA board 110), as shown in Fig. 3A, the apparent thickness of VIPA board 110 as seen from z-axis direction is d1. In contrast, as indicated by C2 in Fig. 2B, when the VIPA board 110 is rotated until the angle $\beta$ about axis A of VIPA board 110 is an acute angle of $\beta$ > 0, as shown in Fig. 3B, the apparent thickness of VIPA board 110 as seen from z-axis direction is d2, that is, d2 = d1/cos$\beta$. Since cos$\beta$ < 1, the apparent thickness d2 may be greater than d1. As indicated by C3 in Fig. 2B, when rotated and displaced in opposite direction of the case of C2, the apparent thickness of VIPA board 110 changes same as in the case of C2.

This apparent change in thickness as seen from the z-axis direction is felt similarly as for the light incident into the VIPA board 110 and multiple-reflected by two reflective films 112, 114. That is, in reference state C1 in Fig. 2B, the optical path multiple-reflected between two reflective films 112, 114 is not displaced on the x-axis as shown in Fig. 3A, and the apparent thickness of VIPA board 110 at this time is d1.

In contrast, in state C2 (or C3) after rotation and displacement of VIPA board 110 as shown in Fig. 2B, the optical path multiple-reflected between two reflective films 112, 114 is displaced on the x-axis as shown in Fig. 3B, and the apparent thickness is d2 = d1/cos$\beta$.

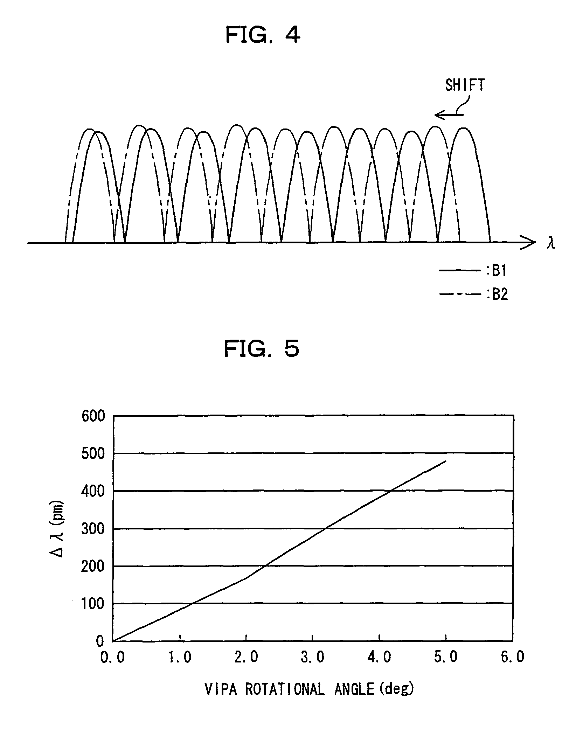

As a result, as the parameter for determining the FSR shown in Formula (2), the optical length t of multiple reflection by the VIPA board 110 is changed, and the value of FSR obtained as the calculation result of Formula (2) is also changed. Hence, the passing wavelength characteristic of the VIPA board 110 can be also shifted from B1 to B2, for example, as shown in Fig. 4.

In other words, the spectral apparatus is capable of varying the passing wavelength characteristics by the above-mentioned VIPA board 110 and rotary mechanism 2. Fig. 5 shows the relation of rotational angle $\beta$ and wavelength variation $\Delta\lambda$ from $\lambda$a of intensifying wavelength to shorter wavelength side, when intensifying the output light wavelength $\lambda$a, supposing the rotational angle $\beta$ on axis A of the VIPA board 110 to be $\beta$ = 0. As shown in Fig. 5, it is observed that the wavelength variation $\Delta\lambda$ is increased when the rotational angle of VIPA board 110 is increased.

That is, in the spectral apparatus having such structure, on the axis substantially vertical to the optical axis of incident light, or the axis substantially vertical to one-dimensional direction of focusing the incident light, by rotating and displacing the position of VIPA board 110 by the rotary mechanism 2, the passing wavelength characteristics can be easily shifted. By keeping correspondence between the degree of angle of rotation and displacement and the passing wavelength characteristics, the passing wavelength characteristics can be set at desired characteristics as spectral apparatus. Further, the response characteristics for varying the passing wavelength can be increased in speed as compared with the technique of varying the thickness by temperature control of the VIPA board 110.

The wavelength dispersion control apparatus 1 of the embodiment is thus composed, and when light is input by way of optical isolator 120 and optical fiber 130, the amount of dispersion can be controlled in each wavelength component contained in the input light. The light controlled in the amount of dispersion is output as output light through the optical fiber 130 and the optical isolator 120.

That is, the light emitted from one end of the optical fiber 130 is converted into parallel light by collimating lens 140, and focused on one line segment by the line focus lens 150, and incident into the space between opposing parallel planes through the irradiation window 116 of the VIPA board 110. In the VIPA board 110, by multiple reflective resonance, the light incident through the irradiation window 116 is formed into a plurality of luminous fluxes different in propagation direction depending on the wavelength.

As a result, when luminous fluxes are focused on one point by the converging lens 160, each focusing position is distributed on a straight line along the y-axis in the diagram depending on changes in wavelength. A three-dimensional mirror 170 is disposed on this straight line, and the light emitted from the VIPA board 110 and focused by the converging lens 160 is reflected at different positions on the three-dimensional mirror 170 depending on each wavelength, and is returned to the VIPA board 110.

In other words, the three-dimensional mirror 170 is a reflector reflecting the luminous fluxes of different wavelengths emitted in different directions from the reflective film 112 forming one reflection surface of the VIPA board 110 as optical component, and returning the fluxes to the VIPA board 110.

The light reflected by the three-dimensional mirror 170 can propagate the VIPA board 110 in the optical path having a different optical path length in each wavelength. That is, the three-dimensional mirror 170 has a three-dimensional shape in the reflection surface shape, and reflects the light converged on different points depending on the wavelength from the converging lens 160, and gives a different optical path length depending on the wavelength of reflected light.

Therefore, by setting the reflection optical path for returning to the VIPA board 110 at each wavelength by the three-dimensional mirror 170, the wavelength dispersion of input light can be controlled. The light thus controlled in wavelength dispersion is returned to the optical fiber 130 by way of the line focus lens 150 and the collimating lens 140, and is output through the optical isolator 120.

At this time, in the rotary mechanism 2, in order to set the passing wavelength characteristics by the VIPA board 110 in expected characteristics, the position of the VIPA board 110 can be rotated and displaced by the rotary mechanism 2, as for the axis substantially vertical to the optical axis of incident light, or the axis substantially vertical to the one-dimensional direction for focusing the incident light.

Accordingly, when the position of the VIPA board 110 is in the reference position, for example, the wavelength range corresponding to the dip D on the output wavelength characteristics can be settled within the passing wavelength region by rotation and displacement of the VIPA board 110 by the rotary mechanism 2, and the passing wavelength characteristics at least as spectral apparatus can be varied in an easy technique while accelerating the response characteristics as compared with the case of temperature control, and the wavelength region capable of controlling the wavelength dispersion can be expanded.

As mentioned above, in the VIPA board 110, the light incident through irradiation window 116 by multiple reflective resonance is emitted through the reflective film 112, and when incident into the converging lens 160, a plurality of linear luminous fluxes different in propagation direction depending on the wavelength are formed.

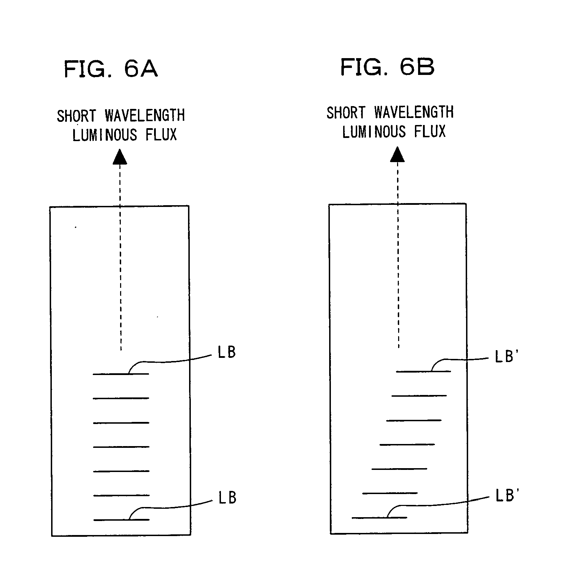

At this time, as indicated by C1 in Fig. 2B, when the position of the VIPA board 110 is in reference state, not rotated about axis A, as shown in Fig. 6A, the both ends of the plurality of linear luminous fluxes LB incident into the converging lens 160 are substantially aligned in a vertical direction [y-axis direction in Fig. 2A and Fig. 2B].

However, when the VIPA board 110 is rotated by the rotary mechanism 2, as shown in Fig. 3B, as the number of stages of multiple reflection between the two reflective films 112, 114 is increased, the optical path is displaced on the x-axis, and as shown in Fig. 6B, in the plurality of linear fluxes LB' incident into the converging lens 160, the both ends are not aligned in the vertical direction (y-axis direction in Fig. 2A, and Fig. 2B), and the luminous fluxes at the upper side in the converging lens 160, that is, the wavelength of luminous fluxes is shorter in the wavelength, and luminous fluxes are deviated on the x-axis.

When the rotational angle $\beta$ by the rotary mechanism 2 is increased, the deviation of luminous fluxes increases, and reaches the limit of formation of different luminous fluxes depending on wavelength by interference. Therefore, the rotary mechanism 2 can vary the passing wavelength characteristics by rotating and displacing in a range of smaller angle than this limit.

Between when the VIPA board 110 is rotated by the rotary mechanism 2 (C2, C3 in Fig. 2B), and when not rotated to remain in reference state (C1 in Fig. 2B), components of reflected light from the three-dimensional mirror 170 emitted through the irradiation window 116 of VIPA board 110 are changed as follows.

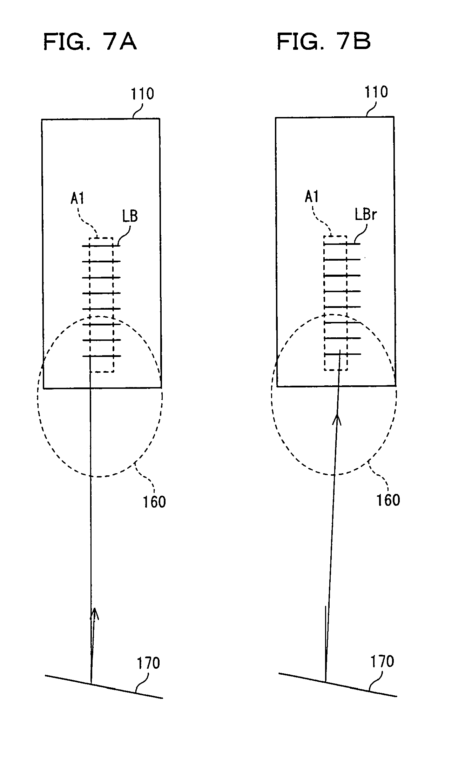

Fig. 7A, and Fig 7B are diagrams explaining the components of light output from the irradiation window 116, out of the light controlled in waveform dispersion by reflection by the three-dimensional mirror 170, in the reference position of the VIPA board 110 not rotated about axis A as shown in C1 in Fig. 2B. When the position of VIPA board 110 is in reference state, as shown in Fig. 7A, the plurality of linear luminous fluxes LB nearly aligned at both ends in the vertical direction pass the converging lens 160, and are reflected by the three-dimensional mirror 170. As a result, the light which has passed through the converging lens 160 as reflected light forms luminous flux LBr as shown in Fig. 7B.

At this time, the light of the overlapping portion of image of luminous flux LBr as reflected light and image of luminous flux LB before reflection is optically coupled, and output as light controlled in wavelength dispersion through the irradiation window 116 of the VIPA board 110.

In this case, the image of luminous flux LBr as reflected light is slightly deviated laterally on the whole as compared with the image of luminous flux LB before reflection, but the overlapping portion of image of luminous flux LBr as reflected light and image of luminous flux LB before reflection is region A1 as shown in Fig.

7A, and Fig. 7B, and between these luminous fluxes LB, and LBr, the region A1 of image overlapping portion can be maintained relatively widely.

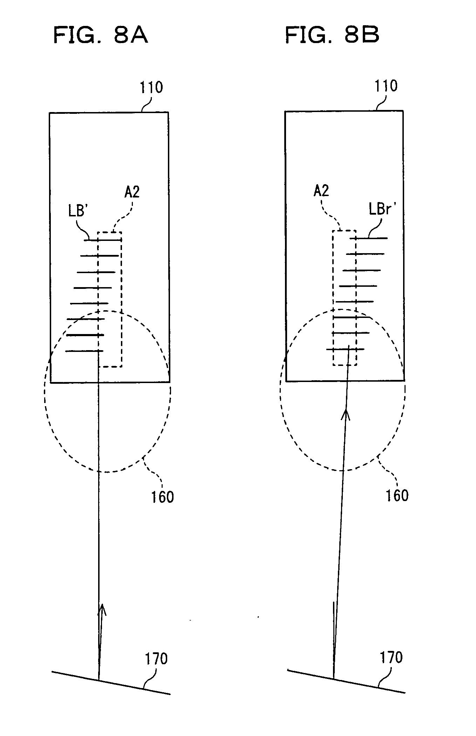

On the other hand, Fig. 8A, and Fig 8B are diagrams for explaining the components of light output from the irradiation window 116, out of the light controlled in waveform dispersion by reflection by the three-dimensional mirror 170, in the rotated position of VIPA board 110 about axis A as shown in C2 or C3 in Fig. 2B. When the position of VIPA board 110 is thus rotated, as shown in Fig. 8A, the plurality of linear luminous fluxes LB' deviated laterally (in each wavelength) pass the converging lens 160, and are reflected by the three-dimensional mirror 170. As a result, the light which has passed through the converging lens 160 as reflected light forms luminous flux LBr' as shown in Fig. 8B.

In this case also, the image of luminous flux LBr' as reflected light is slightly deviated laterally on the whole as compared with the image of luminous flux LB' before reflection. The overlapping portion of image of luminous flux LBr' as reflected light and image of luminous flux LB' before reflection is region A2 as shown in Fig. 8A, and Fig. 8B, which is narrower than when VIPA board 110 is in reference position as shown in Fig. 7A, and Fig. 7B. When displacement by rotation of the VIPA board 110 about axis A is increased, such image overlapping region becomes narrower.

However, at least within the range of angular displacement for allowing overlapping of image of luminous flux LBr' as reflected light and image of luminous flux LB' before reflection, the light controlled in wavelength dispersion can be output through the irradiation window 116, and the function as the wavelength dispersion control apparatus 1 can be maintained. In other words, since the position of the VIPA board 110 can be rotated and displaced about axis A by the rotary mechanism 2, the wavelength range of wavelength dispersion control can be adjusted.

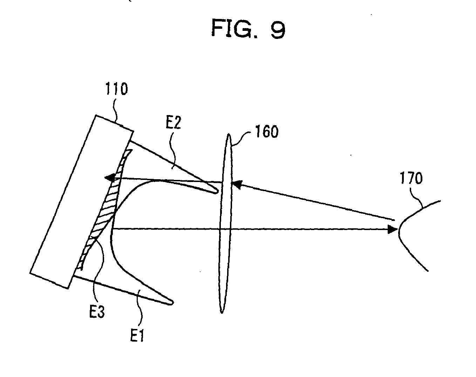

Fig. 9 is a diagram for explaining the relation between the wavelength band controllable in wavelength dispersion by the wavelength dispersion control apparatus 1, that is, the passing wavelength band of the VIPA board 110 (passing wavelength band width in one channel), and the amount of generation of dispersion by the three-dimensional mirror 170.

The light of middle wavelength band emitted from the VIPA board 110 (see A2 in Fig. 12) shows intensity distribution as indicated by E1 in Fig. 9, but the light reflected by three-dimensional mirror 170 shows the intensity distribution as indicated by E1 by image inversion. At this time, the component of overlapping portion E3 of emitted light (E1) from VIPA board 110 and reflected light (E2) is coupled in mode, and is emitted through irradiation widow 116.

At this time, when the dispersion control amount obtained by optical path length difference formed by reflection by the three-dimensional mirror 170 increases, deviation of reflected light from emitted light increases, and the loss is larger. This phenomenon is more obvious when the generated dispersion increases, and the passing wavelength band becomes narrower.

However, as shown in Fig. 8A, and Fig. 8B, within the range of angular displacement for allowing overlapping of luminous flux LB' of emitted light and luminous flux LBr' of reflected light, substantial optical path length difference to cause fluctuation of passing wavelength band does not occur. Therefore, even if the VIPA board 110 is rotated by rotary mechanism 2, as compared with reference state not rotated, there is no fluctuation in the band width of passing wavelength band.

According to the present embodiment, as described herein, the position of VIPA board 110 canbe rotated and displaced by the rotary mechanism 2, about the axis substantially vertical to the optical axis of incident light, that is, axis A substantially vertical to one-dimensional direction of focusing the incident light, and therefore the passing wavelength characteristics can be shifted easily, as compared with the technique of varying the thickness by temperature control of the VIPA board 110, and the response characteristic for varying the passing wavelength can be increased in speed.

[B] Others

In spite of the illustrated embodiment, the invention may be implemented in several forms without departing from the spirit of the essential characteristics thereof.

For example, in the embodiment, the reference position of the VIPA board 110 to be rotated and displaced by the rotary mechanism 2 is the state of rotation and displacement to be parallel to one-dimensional direction in the direction of focusing the incident light by the two reflective films 112, 114 of the VIPA board 110, that is, rotation and displacement state C1 of the VIPA board 110 in Fig. 2B, but the invention is not limited to this, and, for example, the reference position of the VIPA board 110 to be rotated and displaced by the rotary mechanism 2 may be set in the state of rotation and displacement being offset from the position parallel to one-dimensional direction in the direction of focusing the incident light by the two reflective films 112, 114 [for example, rotation and displacement state C2 or C3 in Fig. 2B].

Besides, by referring to the disclosure of the embodiment, those skilled in the art can manufacture the apparatus of the invention.

**Claims**

1.  A spectral apparatus comprising:

    an optical component (110) having two substantially opposing parallel reflection surfaces, the optical component having the spectroscopic function of receiving light focused in a one-dimensional direction between the reflection surfaces, multiply reflecting the incident light on each reflection surface and emitting a part of the incident light through a reflection surface, and allowing the emitted light to interfere mutually to form luminous fluxes different in propagation direction depending on the wavelength, and

a rotary mechanism (2) for rotatably displacing the position of the optical component, on an axis substantially vertical to the optical axis of the incident light, and which axis is substantially vertical to the one-dimensional direction for focusing the incident light.

2. The spectral apparatus of claim 1, wherein the position of the optical component in the rotary mechanism is rotated and displaced, and thus the wavelength range of the light that passes through due to the spectroscopic function of the optical component is displaced.

3. The spectral apparatus of claim 2, wherein the two reflection surfaces rotate and displace in parallel to the one-dimensional direction in the focusing direction of the incident light, on the basis of the position of the optical component for rotating and displacing in the rotary mechanism.

4. The spectral apparatus of claim 2, wherein the two reflection surfaces rotate and displace being offset from the position parallel to the one-dimensional direction in the focusing direction of the incident light, on the basis of the position of the optical component for rotating and displacing in the rotary mechanism.

5. The spectral apparatus of any of claims 1 to 4, further comprising:

a collimating lens for collimating incident light beam into parallel light, and
a line focus lens for focusing the parallel light from the collimating lens on one line segment, and guiding the focused light into the space between the reflection surfaces of the optical component as the light focused in the one-dimensional direction.

6. The spectral apparatus of any of claims 1 to 5, wherein the optical component is composed of virtually imaged phased array.

7. The spectral apparatus of any of claims 1 to 6, further comprising:

a reflector (170) for reflecting luminous fluxes of respective wavelengths emitted in different directions from one of the reflection surfaces of the optical component and returning the luminous fluxes to the optical component.

8. The spectral apparatus of claim 7, wherein the spectral apparatus further comprises a converging lens for converging the luminous fluxes different inpropagation direction depending on the wavelength into one point different in each of the wavelength, and the reflector has a three-dimensional shape in its reflection surface, and reflects light converged in one point different depending on the wavelength from the converging lens, and gives a different optical path depending on the wavelength of the reflected light.

9. The spectral apparatus of any of the preceding claims, the spectral apparatus being a wavelength dispersion control apparatus.

# FIG. 1

EP 1 841 102 A2

FIG. 2A

FIG. 2B

# FIG. 3A

# FIG. 3B

y-AXIS

d1

x-AXIS

β

d2

β

## FIG. 4

## FIG. 5

## FIG. 6A

SHORT WAVELENGTH
LUMINOUS FLUX

LB

LB

## FIG. 6B

SHORT WAVELENGTH
LUMINOUS FLUX

LB'

LB'

# FIG. 7A

# FIG. 7B

110

110

A1

LB

A1

LBr

160

160

170

170

# FIG. 8A

# FIG. 8B

## FIG. 9

EP 1 841 102 A2

# FIG. 10

# FIG. 11

# FIG. 12

VIRTUALLY IMAGED
PHASED ARRAY

INTERFERENCE LIGHT

A1:SHORT WAVELENGTH

A2:MIDDLE WAVELENGTH

A3:LONG WAVELENGTH

EP 1 841 102 A2

# FIG. 13

# FIG. 14

----- POSITION OF DIP

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000511655 A